# EUROPÄISCHE PATENTSCHRIFT

(11) **EP 0 440 898 B1**
(45) Veröffentlichungstag und Bekanntmachung des Hinweises auf die Patenterteilung: **19.01.1994**
(21) Anmeldenummer: 90122464.2
(22) Anmeldetag: 26.11.1990
(51) Int. Cl.: B62D 1/16, B62D 25/14

(54) **Lenksäule, insbesondere für Kraftfahrzeuge**
Steering column, particularly for motor vehicle
Colonne de direction, en particulier pour véhicule automobile

(30) Priorität: 09.02.1990 DE 4003942
(43) Veröffentlichungstag der Anmeldung: 14.08.1991
(73) Patentinhaber: Dr.Ing.h.c. F. Porsche Aktiengesellschaft, 70435 Stuttgart (DE)
(72) Erfinder: Thull, Wolfram, Dipl.-Ing., W-7015 Korntal-Münchingen 2 (DE); Kohlmeier, Hans-Heinrich, Dipl.-Ing., W-7251 Mönsheim (DE)

(56) Entgegenhaltungen:
- DE-C- 443 148
- DE-C- 485 934
- GB-A- 960 876
- US-A- 2 549 925
- PATENT ABSTRACTS OF JAPAN vol. 10, no. 174 (M-490)(2230) 19 Juni 1986

## Beschreibung

Die Erfindung bezieht sich auf eine Lenksäule, insbesondere für Kraftfahrzeuge, nach dem Oberbegriff des Anspruchs 1.

Bei einer bekannten Lenksäule der eingangs genannten Gattung (DE-PS 27 51 068) ist das Mantelrohr mit der darüberliegenden Konsole über Befestigungsschrauben fest verbunden. Ein Lagerabschnitt des Mantelrohres wird dabei mittels der Befestigungsschraube gegen die seitlichen Stege der Konsole bzw. gegen Unterlegscheiben gespannt. Durch dieses axiale Verspannen in Fahrzeugquerrichtung werden die Schwingungen des Vorderwagens über die Konsole auf die Lenksäule übertragen, so daß bei bestimmten kritischen Geschwindigkeitsbereichen und insbesondere bei einem Cabrio-Aufbau ein Lenkradzittern auftritt. Kritische Geschwindigkeitsbereiche sind solche, bei denen beispielsweise durch Umwucht der Räder oder durch Straßenunebenheiten Eigenschwingungsformen des Fahrzeugs angeregt werden.

Zur Reduzierung des Lenkradzitterns wurde vorgeschlagen (US-PS 4 671 536), die Konsole zusätzlich über eine Trägerstruktur an den beiden außenliegenden A-Säulen und an der Mittelkonsole abzustützen. Ein erstes Element der Trägerstruktur verbindet dabei die beiden seitlich außenliegenden A-Säulen, wogegen ein zweites Element einerseits an den Mitteltunnel und andererseits an die benachbarte A-Säule angeschlossen ist. Da jedoch die beiden A-Säulen in Fahrzeugquerrichtung relativ große Schwingungen ausüben (geringe Impedanz), werden auch bei dieser Anordnung die Schwingungen über die Trägerstruktur auf die Lenkkonsole in die Lenksäule übertragen, so daß mit dieser Trägerstruktur nur eine geringfügige Verbesserung des Lenkradzitterns erzielbar ist.

Aufgabe der Erfindung ist es, am Aufbau bzw. an der Lenksäule des Kraftfahrzeuges solche Vorkehrungen zu treffen, daß auch bei kritischen Geschwindigkeitsbereichen bzw.bei einem Cabrio-Aufbau eine wesentliche Verbesserung des Lenkradzitterns erzielt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die - in Querrichtung gesehen - verschiebbare Lagerung der Lenksäule an der Konsole eine Schwingungsentkoppelung zwischen Lenksäule und Vorderwagen geschaffen wird, wodurch die Schwingungen des Vorderwagens nicht über die Konsole an die Lenksäule bzw. das Mantelrohr übertragen werden. In Querrichtung ist das Mantelrohr bzw. die Lenksäule über das Abstützelement lediglich mit einem vibrationsarmen Aufbauteil (große Impedanz) verbunden, wodurch das Lenkradzittern wesentlich reduziert wird. Vorzugsweise ist das Abstützelement mit einem Lagerabschnitt des Mantelrohres und dem Mitteltunnel verbunden. Durch die Entkoppelung von Lenkkonsole und Mantelrohr kann sich die Lenkkonsole in Querrichtung relativ zum Mantelrohr bewegen. Die Fixierung der Lenksäule in Längs- bzw. Höhenrichtung erfolgt durch die Befestigungsschrauben der Konsole. Die Schwingungen in diesen beiden Richtungen sind jedoch vernachlässigbar klein.

Ein Ausführungsbeispiel der Erfindung ist in der Zeichnung dargestellt und wird im folgenden näher beschrieben. Es zeigt
- Fig. 1: eine Ansicht von hinten auf einen Fahrgastraum eines Kraftfahrzeuges mit einer Lenksäule,
- Fig. 2: eine perspektivische Schrägansicht von der Seite auf die Lenksäule,
- Fig. 3: eine Ansicht in Längsrichtung der Lenksäule, teilweise im Schnitt,

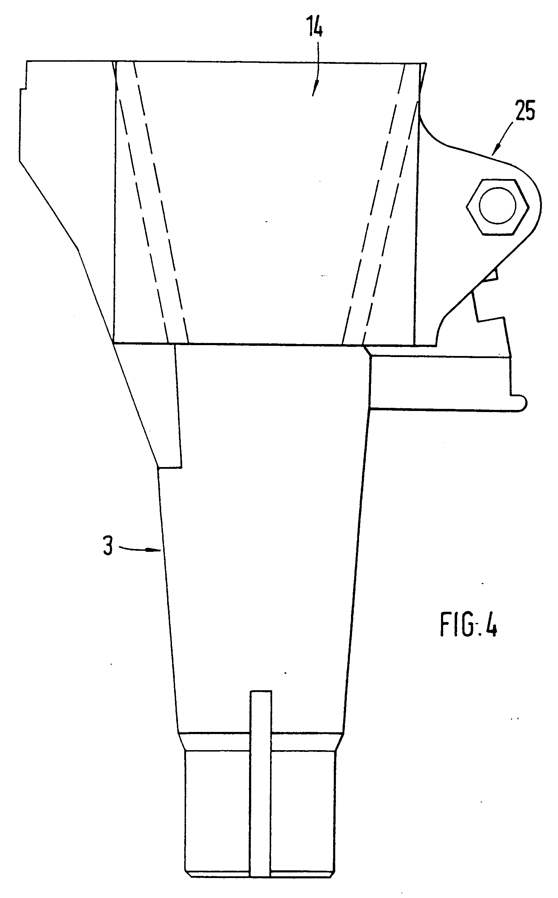

- Fig. 4: eine Ansicht in Pfeilrichtung R der Fig. 3 des Mantelrohres der Lenksäule mit dem angeformten Lagerabschnitt,
- Fig. 5: eine Seitenansicht der Lenksäule und des Abstützelementes.

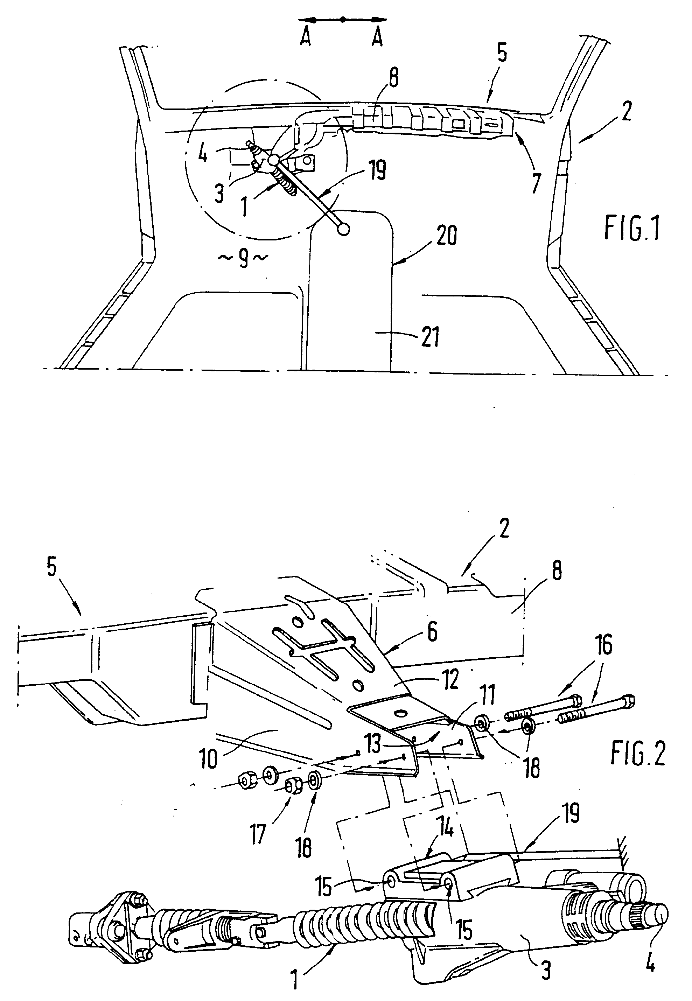

In Fig. 1 ist eine energieabsorbierende Lenksäule 1 für ein Kraftfahrzeug 2 gezeigt. Die Lenksäule 1 besteht im wesentlichen aus einem Mantelrohr 3, das eine Lenkwelle 4 drehbar gelagert aufnimmt (Fig.2). Das obere Ende der Lenkwelle 4 ist in herkömmlicher Weise mit einem nicht näher dargestellten Lenkrad verbunden.

Zur Halterung der Lenksäule 1 ist am Vorderwagen 5 des Aufbaus eine Konsole 6 (Lenkkonsole) vorgesehen, die an einem etwa in Höhe eines Armaturenbretts 7 verlaufenden Querträger 8 befestigt ist und in den Fahrgastraum 9 hineinragt. Die vorzugsweise durch Schweißen mit dem Querträger 8 verbundene Konsole 6 erstreckt sich im wesentlichen oberhalb der Lenksäule 1 und weist im wesentlichen einen U-förmigen Querschnitt mit aufrechten seitlichen Stegen 10, 11 auf. Die Konsole 6 ist nach unten hin offen. An ihrem freien, dem Fahrgastraum 9 zugewandten Ende 13 ist auch eine obere Wand 12 der Konsole 6 ausgespart.

Zwischen den beiden parallel zueinander verlaufenden Stegen 10, 11 wird ein Lagerabschnitt 14 des Mantelrohres 3 aufgenommen, wobei der Lagerabschnitt 14 wenigstens eine quer verlaufende Durchgangsbohrung 15 zum Hindurchführen eines Verbindungselementes 16 aufweist. Das Verbindungselement 16 wird durch einen Schraubbolzen mit endseitiger Mutter oder durch eine Befestigungsschraube gebildet. Gemäß Fig. 2 sind am Lagerabschnitt 14 zwei mit Abstand zueinander angeordnete Durchgangsbohrungen 15 für das Verbindungselement 16 vorgesehen. Der im oberen Bereich des Mantelrohres 3 örtlich angeordnete Lagerabschnitt 14 ist einstückig mit dem darunter liegenden Mantelrohr 3 ausgebildet. Es besteht aber auch die Möglichkeit, daß der Lagerabschnitt 14 durch ein separates Bauteil gebildet wird, das mit dem darunterliegenden Mantelrohr 3 verbunden ist (beispielsweise über eine Schwalbenschwanzführung).

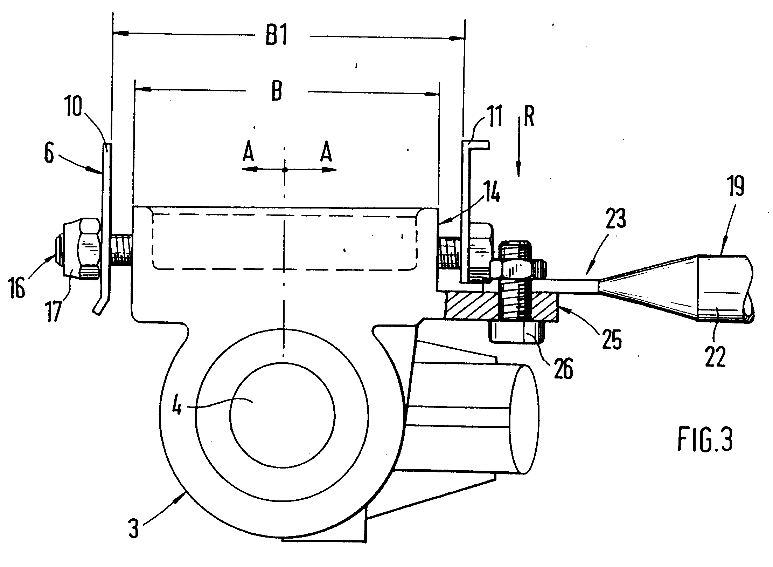

Zur wesenlichen Reduzierung des Lenkradzitterns ist der Lagerabschnitt 14 des Mantelrohres 3 in Querrichtung A-A gesehen verschiebbar an der Konsole 6 gelagert. Dies wird dadurch erzielt, daß der Lagerabschnitt 14 eine wesentlich geringere Breite B aufweist als der innere Abstand B1 zwischen den beiden seitlichen Stegen 10, 11 der Konsole 6. Gemäß Fig. 3 kann sich die Lenksäule im Querrichtung A-A um etwa 5 bis 10 mm relativ zur Konsole 6 bewegen. Die Durchgangsbohrung 15 des Lagerabschnitts 14 und der Schaftdurchmesser des Verbindungselementes 16 sind so aufeinander abgestimmt, daß ein spielfreier Gleitsitz erzielt wird. Die Verbindungselemente 16 sind von der Fahrzeuglängsmittelebene her durch die Stege 10, 11 der Konsole 6 und die Durchgangsbohrung 15 hindurchgeführt, wobei auf die außenliegenden freien Enden Muttern 17 und gegebenenfalls Unterlegscheiben 18 montiert sind. Durch die Verbindungselemente 16 und die Konsole 6 wird die Lenksäule 1 in Längs- und Höhenrichtung festgelegt.

Zur vibrationsarmen Halterung der Lenksäule in Fahrzeugquerrichtung A-A ist ein biegesteifes Abstützelement 19 vorgesehen, das das Mantelrohr 3 mit einem im Vergleich zum Vorderwagen 5 relativ schwingungsarmen Aufbauelement 20 verbindet. Das eine große Impedanz aufweisende Aufbauelement 20 wird gemäß Fig. 1 durch den längsverlaufenden Mitteltunnel der Bodenanlage gebildet. Versuche haben gezeigt, daß der Mitteltunnel 21 in Fahrzeugquerrichtung A-A wesentlich weniger schwingt als beispielsweise der Vorderwagen 5, der Stirnwandbereich und die außenliegenden A-Säulen.

Das Abstützelement 19 wird durch ein Rohr 22 gebildet, dessen Endbereiche 23, 24 gebogen und abgeflacht sind. Zur Befestigung des oberen Endbereiches 23 des Abstützelementes 19 ist am Mantelrohr 3 bzw. am Lagerabschnitt 14 eine zur Mittelkonsole 21 hin gerichtete Anformung 25 vorgesehen, auf der ein abgeflachter Endbereich 23 des Rohres 22 aufliegt und über eine Schraubverbindung daran befestigt ist. Die Anformung 25 überragt die Konsole 6 zur Seite hin. Eine Schraube 26 wird von unten her durch Bohrungen der Anformung 25 und des Endbereichs 23 des Rohres 22 hindurchgeführt und danach wird von oben her eine Mutter auf die Schraube 26 aufgedreht (Fig. 3).

Der untenliegende Endbereich 24 des Abstützelementes 19 wird entweder direkt oder unter Zwischenschaltung eines Halters 27 mit dem Mitteltunnel 21 fest verbunden. Die Anbindung des Abstützelementes 19 an den Mitteltunnel 21 erfolgt entweder an einer der Seitenwände oder aber an der oberen Begrenzungswand 28 des Mitteltunnels 21. Eine besonders günstige Anbindung des Abstützelementes an den Aufbau wird dann erzielt, wenn der aufbauseitige Befestigungspunkt des Abstützelementes im Bereich eines Schwingungsknotens liegt. Ein derartiger Schwingungsknoten in der betreffenden Ebene (Fahrzeugquerrichtung) kann empirisch ermittelt werden.

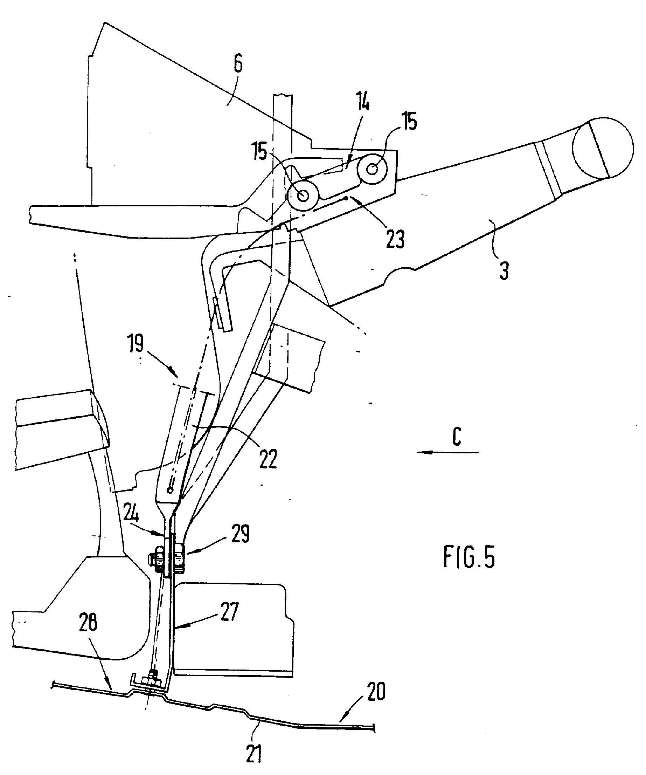

Gemäß Fig.5 ist an der oberen Begrenzungswand 28 des Mitteltunnels 21 ein quer verlaufender Halter 27 angebracht, an den der untere Endbereich 24 des Abstützelementes 19 angeschraubt wird. Eine Schraube 29 erstreckt sich dabei in Fahrzeuglängsrichtung. Entsprechend Fig. 5 liegt das untere Ende 24 des Abstützelementes 19 in Fahrtrichtung C gesehen etwas weiter vorne als der obere Endbereich 23. Zwischen den beiden Befestigungspunkten des Abstützelementes 19 weist dieses einen gebogenen Formverlauf auf (Fig. 5). Es besteht jedoch die Möglichkeit, daß das Abstützelement 19 zwischen den Endbereichen 23, 24 einen geradlinigen Formverlauf aufweist (Fig. 1).

## Patentansprüche

1. Lenksäule (1), insbesondere für Kraftfahrzeuge mit einem Mantelrohr, an dem örtlich zumindest ein Lagerabschnitt zum Befestigen des Mantelrohres an einer am Vorderwagen angebrachten Konsole vorgesehen ist,
**dadurch gekennzeichnet,** daß der Lagerabschnitt (14) des Mantelrohres (3) - in Fahrzeugquerrichtung (A-A) gesehen - verschiebbar an der Konsole (6) angeordnet ist und daß das Mantelrohr (3) über ein Abstützelement (19) an ein vibrationarmes Aufbauteil (20) große Impedanz angeschlossen ist.

2. Lenksäule nach Anspruch 1, **dadurch gekennzeichnet,** daß das Aufbauteil (20) durch einen Mitteltunnel (21) der Karosserie gebildet wird.

3. Lenksäule nach Anspruch 1, **dadurch gekennzeichnet,** daß das Abstützelement (19) durch ein Rohr (22) gebildet wird.

4. Lenksäule nach Anspruch 1, **dadurch gekennzeichnet,** daß ein oberer Endbereich (23) des Abstützelements (19) mit dem Lagerabschnitt (14) des Mantelrohres (3) verbunden ist.

5. Lenksäule nach den Ansprüchen 1 und 2, **dadurch gekennzeichnet,** daß am Lagerabschnitt (14) auf der der Mittelkonsole (21) zugewandten Seite eine Anformung (25) vorgesehen ist, auf der ein freier obenliegender Endbereich (23) des Abstützelementes (19) aufliegt und über eine Schraubverbindung daran befestigt ist.

6. Lenksäule nach Anspruch 1, **dadurch gekennzeichnet,** daß ein untenliegender Endbereich (24) des Abstützelementes (19) mit einem Halter (27) verbunden ist, der auf die obere Begrenzungswand (28) der Mittelkonsole (21) aufgesetzt ist.

## Claims

1. A steering column (1), in particular for motor vehicles with a steering-column sleeve, on which at least one bearing portion is provided locally for securing the steering-column sleeve to a bracket attached to the front [of the] vehicle, **characterized in that** the bearing portion (14) of the steering-column sleeve (3) is mounted on the bracket (6) so as to be displaceable as viewed in the transverse direction (A-A) of the vehicle, and the steering-column sleeve (3) is attached by way of a support member (19) to a low-vibration (high-impedance) body part (20).

2. A steering column according to Claim 1, **characterized in that** the body part (20) is formed by a central tunnel (21) in the bodywork.

3. A steering column according to Claim 1, **characterized in that** the support member (19) is formed by a tube (22).

4. A steering column according to Claim 1, **characterized in that** an upper end area (23) of the support member (19) is connected to the bearing portion (14) of the steering-column sleeve (3).

5. A steering column according to Claims 1 and 2, **characterized in that** an integrally moulded portion (25), on which a free overlying end area (23) of the support member (19) rests and is secured thereto by way of a screw connexion, is provided on the bearing portion (14) on the side facing the central bracket (21).

6. A steering column according to Claim 1, **characterized in that** an underlying end area (24) of the support member (19) is connected to a holder (27) mounted on the upper boundary wall (28) of the central bracket (21).

## Revendications

1. Colonne de direction (1) en particulier pour véhicule automobile comportant un tube de gainage sur lequel est prévu localement au moins une partie d'appui destinée à fixer le tube de gainage sur une console, placée à l'avant du véhicule, caractérisée en ce que la partie d'appui (14) du tube de gainage (3) - vue dans la direction transversale (A-A) du véhicule - peut coulisser sur la console (6) et en ce que le tube de gainage (3) est raccordé, par un élément d'appui (19), à un élément de carrosserie (20) de grande impédance, peu sujet à des vibrations.

2. Colonne de direction selon la revendication 1, caractérisée en ce que l'élément de carrosserie (20) est formé par un tunnel central (21) de la carrosserie.

3. Colonne de direction selon la revendication 1, caractérisée en ce que l'élément d'appui (19) est formé par un tube (22).

4. Colonne de direction selon la revendication 1, caractérisée en ce qu'une zone terminale (23) supérieure de l'élément d'appui (19) est reliée à la partie d'appui (14) du tube de gainage (3).

5. Colonne de direction selon les revendications 1 et 2, caractérisée en ce que sur la partie d'appui (14), sur le côté tourné vers la console centrale (21), il est prévu un relief (25) sur lequel repose une zone terminale (23) supérieure de l'élément d'appui (19) et qui est fixé sur celui-ci, par un assemblage vissé.

6. Colonne de direction selon la revendication 1, caractérisée en ce qu'une zone terminale (24) inférieure de l'élément d'appui (19) est reliée à un support (27) qui est placé sur la paroi de délimitation (28) supérieure de la console centrale (21).
